# EUROPEAN PATENT SPECIFICATION

(11) **EP 0 596 111 B1**
(45) Date of publication and mention of the grant of the patent: **22.10.1997**
(21) Application number: 91913082.3
(22) Date of filing: 19.07.1991
(51) Int. Cl.: C08F 10/00, C08F 2/34

(54) **PROCESS FOR FEEDING CATALYST TO FLUIDIZED BED FOR VAPOR PHASE POLYMERISATION**
VERFAHREN FÜR DIE ZUFUHR VON KATALYSATOR IN EIN WIRBELBETT FÜR DIE DAMPFPHASEPOLYMERISATION
PROCEDE D'ALIMENTATION EN CATALYSEUR D'UN LIT FLUIDISE POUR PROCEDER A UNE POLYMERISATION EN PHASE VAPEUR

(30) Priority: 20.07.1990 JP 192424/90
(43) Date of publication of application: 11.05.1994
(73) Proprietor: NIPPON PETROCHEMICALS CO., LTD., Tokyo 100 (JP)
(72) Inventor: KUBO, Kunimichi, 1-7-17, Yagumo, Tokyo 152 (JP); WATANABE, Motokazu, 438, Miyauchi Nakahara-ku, Kanagawa 211 (JP); YOSHIKAWA, Mamoru, 16-19, Isecho Kawasaki-ku, Kanagawa 210 (JP); MORIKAWA, Masatoshi, 3-21-17, Nakamachi, Tokyo 158 (JP); YAMAGUCHI, Yoshihisa, 5-38-2-211, Minami Kase, Kanagawa 211 (JP)
(74) Representative: Strehl Schübel-Hopf Groening & Partner
(86) International application number: PCT/JP91/00968
(87) International publication number: WO 92/01722

(56) References cited:
- JP-B-49 017 426
- JP-B-52 045 750
- JP-B-59 021 321

## Description

### - TECHNICAL FIELD -

This invention relates to a process for feeding a catalyst in the polymerization of olefin using a vapor phase fluidized bed. More particularly, the invention relates to a process for avoiding the formation of polymer lumps by improving the structure of catalyst feeding lines, thereby enabling the continual feeding of a powder catalyst.

### - BACKGROUND ART -

The vapor phase polymerization of olefin using a fluidized bed has been known. For example, according to the disclosure in Japanese Laid-Open Patent Publication No. 47-13962, the following items are referred to as main factors in the fluidized bed vapor phase polymerization apparatus:
(I) To form a fluidized bed with polymer particles,
(II) To make even the distribution of olefin gas with a gas distribution plate,
(III) To fluidize the particles and to remove the heat of polymerization with olefin gas,
(IV) To cool a reactor with the circulation of olefin gas using an external heat exchanger,
(V) To feed a solid catalyst,
(VI) To feed a catalyst promoter, and
(VII) To control the height of fluidized bed and to take out polymer particles.

In addition, a vapor phase polymerization apparatus utilizing a stirred bed reactor has also been known (e.g., Japanese Patent Publication No. 59-21321).

When any type of the above-mentioned reactor is used, the controlling of polymerization reaction is an important factor in practical operation. This is usually done by regulating the rate of feeding of a catalyst. However, the conventional polymerization process of olefin is carried out under a pressure higher than the ordinary pressure and the catalyst employed is in the form of powder. It was difficult in the conventional practice to feed predetermined quantities of solid powder continually in small doses.

In order to solve the above problem, for example, in Japanese Patent Publication No. 49-17426, a method is disclosed that a catalyst is fed into a fluidized bed reactor through four steps of subdividing, intercepting, exposing and flashing of the catalyst by the combination of alternate opening and closing of a catalyst feed line. Furthermore, catalyst feeding apparatus are disclosed in Japanese Patent Publication Nos. 52-45750 and 53-8666, which apparatus are substantially based on the above method.

When a highly active catalyst in a lumpy state is fed into a reactor, the polymerization is initiated before catalyst particles are well dispersed. As a result, it is not desirable because the polymer particles are melted by the heat of polymerization which are liable to gather into lumps. The highly active catalysts which are developed in recent years, are liable to cause the problems of this kind. Accordingly, the use of a process to feed a catalyst in a lumpy form must possibly be avoided. That is, a weighed catalyst is desirably fed continually in small doses. In such a case, however, when the quantity of each feed is too small, even though the fear of forming lumps is reduced, the number of complicated valve operation to open and close a catalyst feed line increases, which fact undesirably causes the increase of man-hours. In other words, in industrial operations, it is required that each dose of a catalyst is large to some extent.

In view of the above-described requirement, the object of the present invention is to provide a vapor phase polymerization process employing a fluidized bed reactor, wherein a catalyst is continually fed in small doses in a dispersed state without difficulty.

One attempt in order to provide a process wherein the catalyst is continuously fed is disclosed in the Australian patent application AU-A-499 123, which relates to a method for producing polyolefin by catalytically polymerizing a gaseous stream of polymerizable olefin monomers in the reaction zone of a fluidized bed reactor.

According to the method disclosed therein, a pressurized gas stream containing a finely divided solid olefin polymerization catalyst in the form of free flowing particles having a maximum particle size of 0.30 inches in their greatest diameter is introduced into the reaction zone under a pressure greater than that in said reaction zone and through an elongated, cylindrical zone having an inside diameter which is at least three times the largest diameter of said particles.

### - BRIEF DESCRIPTION OF DRAWINGS -

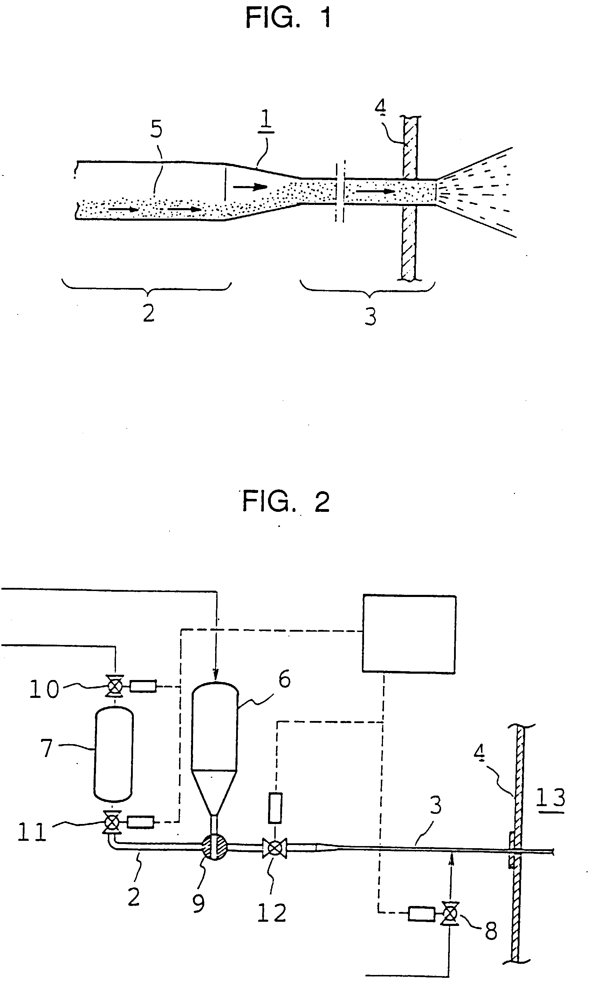

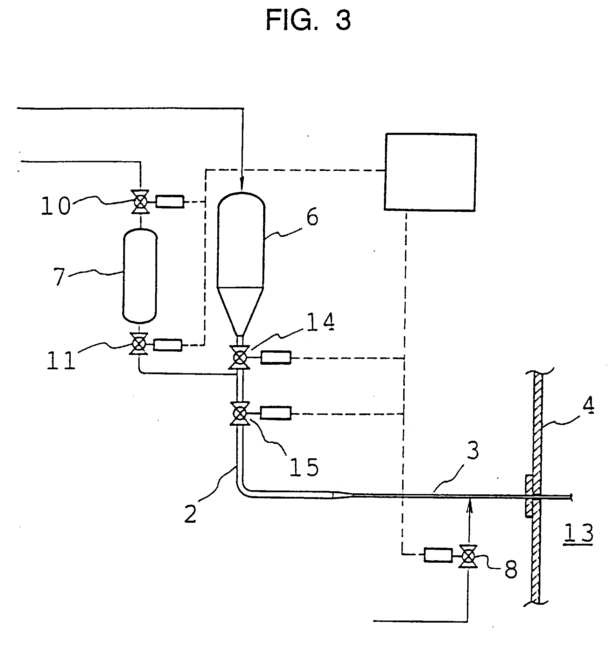

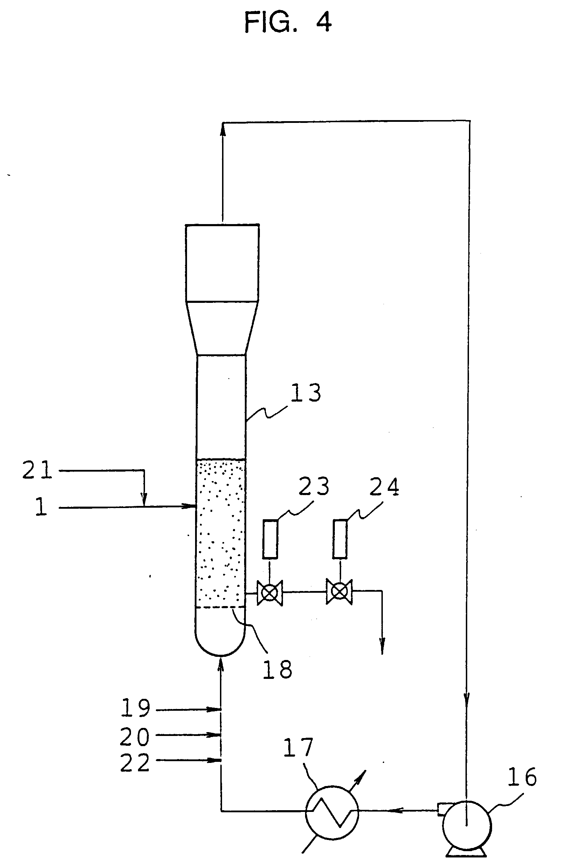

Fig. 1 is a schematic cross-sectional view of an embodiment of the catalyst feeding pipe according to the present invention; Fig. 2 and Fig. 3 are explanatory illustrations of catalyst feeding devices, and Fig. 4 is an explanatory illustration of a reaction apparatus of fluidized bed type.

### - DISCLOSURE OF INVENTION -

In view of the above-described object, the inventors of the present application have carried out extensive investigations and, as a result, it was found out that a catalyst can easily be fed smoothly in a dispersed state by reducing the cross-sectional area of a catalyst feeding pipe in its midway.

In other words, the present invention provides a vapor phase polymerization of olefin using a fluidized bed reactor to feed a powder catalyst intermittently into a high pressure reactor using a gas, the process for feeding a gas being characterized in that the catalyst feeding pipe (1) comprises a fore pipe (2) and a rear pipe (3) which are separated by a tapered portion, said rear pipe (3) having a cross-sectional area which is reduced by 5 to 50% compared to that of the fore pipe (2), and the catalyst feeding pipe (1) is horizontal or slightly inclined.

The present invention will be described in more detail in the following.

The catalysts used in the process of the present invention are highly active olefin polymerization catalysts, which are exemplified by conventionally known ones such as Ziegler catalyst and Philips catalyst. The catalysts are powdery with average particle sizes in the range of 10 to 200 µm. An embodiment of a catalyst feeding pipe used in the present invention is shown in Fig. 1. The catalyst feeding pipe 1 comprises a fore pipe 2 of a larger diameter and a rear pipe 3 of a smaller diameter 3. The open end portion of the rear pipe 3 is passed through the wall 4 of a reactor and it is led into the inside of the reactor. In the first place, a predetermined quantity of a catalyst 5 is weighed and is fed into the fore pipe 2. The inner diameter of the fore pipe 2 is comparatively large because the quantity of dose of the catalyst must be large to some extent as described above. The catalyst particles 5 fed into the fore pipe 2 are transferred in the direction of arrows into the rear pipe 3 having a smaller diameter by the flow of an inert gas which is fed from the foremost side. In this step, the velocity of the catalyst particles is increased and the catalyst particles are continuously passed into the reactor together with the flow of the gas. In other words, the particles of catalyst 5 move slowly along the lower inside face of the pipe 2 because the velocity of gas flow is low. In order to make this movement smooth, the fore pipe 2 can be slightly inclined. The inner diameter of the rear pipe 3 is made small in order to accelerate the flow of gas and improve the dispersion of the catalyst particles 5. However, when the diameter of the pipe 3 is too small, it is not desirable because the velocity of gas is too high and the head loss is caused to occur. Meanwhile, in order to prevent the tip end of the rear pipe 3 from the blocking with polymer particles, it is desirable to supply always the pipe 3 with an inert gas. For this reason, in order to avoid the lowering of the partial pressure of an olefin in the reactor due to the supply of the inert gas, the inner diameter of the pipe 3 is desirably made small to reduce the rate of gas flow.

The velocity of gas flow in the rear pipe 3 is determined according to the following factors:
- Δp: Pressure difference between a gas reservoir tank and a reactor
- v: Volume of the gas reservoir tank
- d: Inner diameter of the rear pipe 3
- l: Length of the rear pipe 3

In the above factors, the value of Ap x v is the driving force of the feed of a catalyst. When this value is too large, however, a too high amount of the inert gas is introduced into the reactor, which reduces the partial pressure of olefin and lowers the rate of reaction. Accordingly, the value of Ap x v is naturally limited. Furthermore, because both the values of d and l determines the resistance to gas flow, they have a direct influence to the above Ap. In view of the relationship among these, the values of the above factors may be set in the following ranges.
- Δp:: 0.5-10 kg/cm², preferably 1-5 kg/cm²
- v:: 1-100 liter, preferably 3-20 liter
- d:: 3-10 mmφ, preferably 4-8 mmφ
- l:: preferably short, more preferably 1-10 m.

A suitable inner diameter of the foregoing fore pipe 2 is 5-30 mmφ because it receives more than a certain amount of a weighed catalyst and it is preferably 10-25 mmφ. When the inner diameter of the fore pipe 2 is less than 5 mmφ, the quantity of one feed of a catalyst is too small, which increases the repetition of the feeding of a catalyst, which is accompanied by troublesome operation. On the other hand, when the inner diameter is more than 30 mmφ, it is not desirable because the continuous flashing of the catalyst particles is difficult even when the inner diameter of the rear pipe 3 is adjusted.

In view of the flowing condition of catalyst particles, the gas velocity in the catalyst feeding pipe 1 is in the range of 3-10 m/sec, preferably 4-8 m/sec in the fore pipe 2 and 10-60 m/sec, preferably 15-50 m/sec in the rear pipe 3. Incidentally, the state of flow in the transferring of particles with a gas flow is described on page 269 of *Bulk Handling Technique of Powdery Particles*, edited by Nippon Huntai Kogyo Gijutu Kyokai, published by Nikkan Kogyo Shimbunsha.

Under the above conditions, it is further necessary that the ratio in cross-sectional areas of the rear pipe 3 to the fore pipe 2 is in the range of 5-50%. When the ratio of cross-sectional area is less than 5%, the catalyst feeding pipe 1 is liable to be blocked. On the other hand, when the ratio of cross-sectional area is more than 50%, the catalyst in the state of lumps is fed into the reactor, which is not desirable because polymer blocks are liable to be formed.

Furthermore, it is desirable that the cross-sectional area of the boundary portion between the fore pipe 2 and the rear pipe 3 of the catalyst feeding pipe 1 is gradually reduced. For example, both the members are connected with a reducing joint.

In the following, a process for feeding a catalyst into a fluidized bed reactor is described with reference to Figs. 2 and 3. In the drawing, the reference numeral 6 denotes a catalyst reservoir tank and 7, an inert gas reservoir tank. Before a catalyst is fed, only the valve 8 among automatic ball valves in Fig. 2 is opened and the other valves are closed. The catalyst measuring valve 9 is opened in the horizontal direction. In the catalyst feeding operation started from this state, the valve 10 is once opened to fill up the inert gas reservoir tank 7 with an inert gas and the valve is closed then. The catalyst measuring valve 9 is then opened in the vertical direction to allow the catalyst to flow down from the catalyst reservoir tank 6 into the fore pipe 2. A valve 11 is then opened, the valve 8 is closed and the valve 12 is opened after that. By opening horizontally the catalyst measuring pipe 9, a predetermined quantity of the catalyst held in the fore pipe 2 is flashed into the reactor 13 by way of the rear pipe 3 owing to the force of gas flow from the inert gas reservoir tank 7. After the feeding of the catalyst, the valve 12 is closed, the valve 8 is opened and the valve 11 is closed returning to the initial state.

In Fig. 3, only the valve 8 is opened and all the other valves are closed in the state before the feeding of the catalyst, like the embodiment in Fig. 2. When a catalyst is fed, the inert gas reservoir tank 7 is filled with an inert gas by opening once and then closing the valve 10. The valve 14 is then opened and closed to introduce a portion of the catalyst into the space between the valves 14 and 15. The valve 11 is then opened and the valve 8 is closed. After that, by opening the valve 15, the subdivided catalyst is flashed into the reactor 13 through the fore pipe 2 and the rear pipe 3 by the gas flow. After the operation, the valve 15 is closed, the valve 8 is opened and the valve 11 is closed to return to the initial state.

In the above-described two embodiments, it is desirable that the diameter of the catalyst measuring valve 9 in Fig. 2 and that of the measuring portion between the valves 14 and 15 in Fig. 3 are made large to some extent so as to allow the catalyst powder to drop. That is, like the fore pipe 2, the inner diameter of them may be 5 to 30 mmφ, preferably 10 to 25 mmφ.

### - BEST MODE FOR CARRYING OUT THE INVENTION -

The present invention is described in the following with reference to examples and comparative examples. It is to be noted that the present invention is not restricted to them.

### (Example 1)

A fluidized bed reactor 13 shown in Fig. 4 was used. Gas was circulated through a loop comprising a blower 16, a cooler 17 and a flow regulator (not shown). The gas which was introduced into the reactor 13 was evenly distributed by a distribution plate 18.

In the first place, the powder of previously dried linear low density polyethylene was fed into a reactor and the temperature in the reactor 13 was maintained at 85°C by circulating a gas with the above blower 16. With adjusting the ratios in the gas phase of hydrogen/ethylene (molar ratio) to 0.10 and 1-butene/ethylene to 0.40, hydrogen was fed through a line 19, and a mixture of 1-butene and ethylene was fed through a line 20. Nitrogen gas was fed from a line 21 so as to control the nitrogen concentration at 35 mole % and the total pressure was maintained at 20 kg/cm²·G.

Polymerization reaction was started with feeding a solution of triethylaluminum in hexane as a catalyst promoter through a pipe 22 and a highly active solid catalyst through a catalyst feeding pipe 1. In the catalyst, Ti, Mg and Al were carried on silica carrier.

The feeding of the solid catalyst was carried out using a device shown in Fig. 2. The inner diameters of the valves 9 and 12 and the fore pipe 2 were 10 mm and the inner diameter of the rear pipe 3 was 4 mm (ratio in cross-sectional areas: 16%). A reducing joint of 10 mm in length was used for the diameter-reduced portion from the 10 mmφ end to the 4 mmφ end. With the progress of the formation of polymer particles of ethylene·1-butene copolymer, the produced particles were taken out from the reaction system through ball valves 23 and 24. The obtained polymer product was 0.95 g/10 min. in MFR and 0.9204 g/cm³ in density, and white freely flowing particles.

The operation could be continued without any trouble and the reaction was stopped after 33 days. The condition in the reactor was checked up, however, it was clear without any lumpy polymer product.

### (Comparative Example 1)

Using an apparatus like that used in example 1, preparation of ethylene·1-butene copolymer was carried out in the like method and conditions. The apparatus shown in Fig. 2 was used like in Example 1 for feeding the catalyst, wherein the inner diameters of the valves 9 and 12 and the fore pipe 2 were all 10 mm, in addition, the inner diameter of the rear pipe 3 was also 10 mm in this Comparative Example (ratio in cross-sectional areas: 100%).

About 4 hours after the start of polymerization, lumpy polymer balls of 10 to 15 mm in diameter were found in the polymer particles. Because the number of these balls increased with the passage of time, the operation was stopped after 48 hours. When the inside of the reactor was checked, a large quantity of the above lumpy polymer balls were observed. The color of cross section of this lumpy polymer was dark gray and much catalyst was contained.

From the above results, it was understood that when the cross-sectional area of the catalyst feeding pipe is not reduced in the midway, the dispersion of the catalyst particles was insufficient and the melting of polymer particles is caused to occur in the reactor.

### (Comparative Example 2)

Using an apparatus like that used in example 1, preparation of ethylene·1-butene copolymer was carried out in the like method and conditions. The apparatus shown in Fig. 2 was used like in Example 1 for feeding the catalyst. The inner diameters of the valves 9 and 12 and the fore pipe 2 were all 10 mm, however, the inner diameter of the rear pipe 3 was 2 mm in this Comparative Example (ratio in cross-sectional areas: 4%). A reducing joint was used for the portion between them.

In this Comparative Example, the reaction was not stable after the start of polymerization. In addition, the feed of the catalyst became impossible after 5 hours from the start of polymerization, so that the operation was stopped. When the inside of the reactor was checked, the fore pipe 2 was blocked.

As described above, it was understood that, when the rate of reduction of cross-sectional areas is too high, the smooth and continual flashing of a catalyst is hardly carried out.

### - INDUSTRIAL APPLICABILITY -

In the polymerization of olefin with a gas phase fluidized bed, the continual feed of a powder catalyst in small doses can be done without difficulty by reducing midway the cross section of a catalyst feeding pipe. As a result, the operation can be continued for a long time by avoiding the formation of lumps of polymer.

## Claims

1. A process for the vapour phase polymerization of an olefin using a fluidized bed reactor wherein a powder catalyst is fed intermittently into a high pressure reactor using a gas through a catalyst feeding pipe (1) comprising a fore pipe (2) and a rear pipe (3) which are separated by a tapered portion, wherein said rear pipe (3) has a cross-sectional area which is reduced by 5 to 50% compared to that of the fore pipe (2), and the catalyst feeding pipe (1) is horizontal or slightly inclined.

2. The process according to claim 1, wherein the inner diameter of said fore pipe (2) is 5 to 30 mm.

3. A process according to claim 1 or claim 2, wherein said olefin is selected from ethylene and α-olefin.

4. The process of any of the claims 1 to 3, wherein said powder catalyst is a highly active catalyst for use in the polymerization of an olefin.

5. The process according to any of the claims 1 to 4, wherein the gas flow moving the catalyst powder in said fore pipe (2) has a velocity of 3 to 10 m/sec and the gas flow moving the catalyst powder in said rear pipe (3) has a velocity of 10 to 60 m/sec.

## Patentansprüche

1. Verfahren für die Dampfphasenpolymerisation eines Olefins unter Verwendung eines Fluidbettreaktors, wobei ein pulverförmiger Katalysator intermittierend mit Hilfe eines Gases in einen Hochdruckreaktor durch ein Katalysator-Zuführungsrohr (1) eingespeist wird, welches ein vorderes Rohr (2) und ein rückwärtiges Rohr (3) umfaßt, die durch einen verjüngten Bereich voneinander getrennt sind, wobei das rückwärtige Rohr (3) eine gegenüber der Querschnittsfläche des vorderen Rohres (2) um 5 bis 50% verringerte Querschnittsfläche aufweist und das Katalysator-Zuführungsrohr (1) horizontal oder leicht geneigt ist.

2. Verfahren nach Anspruch 1, wobei der Innendurchmesser des vorderen Rohres (2) 5 bis 30 mm beträgt.

3. Verfahren nach Anspruch 1 oder Anspruch 2, wobei das Olefin unter Ethylen und einem α-Olefin ausgewählt ist.

4. Verfahren nach einem der Ansprüche 1 bis 3, wobei der pulverförmige Katalysator ein hochaktiver Katalysator zur Verwendung für die Polymerisation eines Olefins ist.

5. Verfahren nach einem der Ansprüche 1 bis 4, wobei der den pulverförmigen Katalysator in dem vorderen Rohr (2) transportierende Gasstrom eine Geschwindigkeit von 3 bis 10 m/sec hat und der den pulverförmigen Katalysator transportierende Gasstrom in dem rückwärtigen Rohr (3) eine Geschwindigkeit von 10 bis 60 m/sec aufweist.

## Revendications

1. Procédé de polymérisation en phase vapeur d'une oléfine utilisant un réacteur à lit fluidisé dans lequel on introduit de manière intermittente un catalyseur en poudre dans un réacteur haute pression en utilisant un gaz par une canalisation d'alimentation en catalyseur (1) comprenant une canalisation avant (2) et une canalisation arrière (3) qui sont séparées par une partie effilée, ladite canalisation arrière (3) ayant une surface de section qui est réduite de 5 à 50% par comparaison avec celle de la canalisation avant (2), et la canalisation d'alimentation en catalyseur (1) est horizontale ou légèrement inclinée.

2. Procédé selon la revendication 1, dans lequel le diamètre interne de ladite canalisation avant (2) est de 5 à 30 mm.

3. Procédé selon la revendication 1 ou la revendication 2, dans lequel ladite oléfine est choisie parmi l'éthylène et l'α-oléfine.

4. Procédé de l'une quelconque des revendications 1 à 3, dans lequel ledit catalyseur en poudre est un catalyseur hautement actif pour utilisation dans la polymérisation d'une oléfine.

5. Procédé selon l'une quelconque des revendications 1 à 4, dans lequel le courant de gaz déplaçant la poudre de catalyseur dans ladite canalisation avant (2) a une vitesse de 3 à 10 m/s et le courant de gaz déplaçant la poudre de catalyseur dans ladite canalisation arrière (3) a une vitesse de 10 à 60 m/s.
